# EUROPÄISCHE PATENTANMELDUNG

(11) **EP 1 508 795 A1**
(43) Veröffentlichungstag der Anmeldung: **23.02.2005**
(21) Anmeldenummer: 03405606.9
(22) Anmeldetag: 20.08.2003
(51) Int. Cl.: G01N 21/39, G01J 3/10, G01J 3/28

(54) **Absorptionsspektrometer mit niedriger Nachweisgrenze**

(71) Anmelder: ABB RESEARCH LTD., 8050 Zürich (CH)
(72) Erfinder: Naegele, Markus, 79713 Bad Säckingen (DE); Fach, Alexander, 8049 Zürich (CH); Brändle, Hubert, 8102 Oberengstringen (CH); Bohnert, Klaus, 5452 Oberrohrdorf (CH)
(74) Vertreter: ABB Patent Attorneys

(57) **Zusammenfassung**

Das Spektrometer zur Bestimmung eines Absorptionsspektrums einer Probe (3), umfasst eine Lichtquelle (1) zur Emission von Licht (L) entlang eines Lichtweges (L), auf welchem die Probe (3) angeordnet ist, einen auf dem Lichtweg (L) nach der Probe (3) angeordneten Mehrkanaldetektor (6) zur Detektion des Lichtes (L), und ein auf dem Lichtweg (L) zwischen der Lichtquelle (1 ) und dem Mehrkanaldetektor (6) angeordnetes wellenlängendispersives Element (5) zur Erzeugung einer lichtwellenlängenabhängigen Ablenkung des Lichtes (L). Es ist dadurch gekennzeichnet, dass die Lichtquelle (1 ) ein Laser (1) ist. Vorteilhaft ist der Laser (1 ) ein spektraler Singlemode-Laser (1 ) ist, der verstimmbar ist, oder der Laser (1) ist ein spektraler Multimode-Laser (1) zur Emission einer Vielzahl von Lichtmoden unterschiedlicher Wellenlängen, wobei Lichtmoden unterschiedlicher Wellenlänge auf unterschiedliche Kanäle des Mehrkanaldetektors (6) abbildbar sind. Im Falle des spektralen Multimode-Lasers (1) weist dieser vorteilhaft entweder eine Vorrichtung zur Stabilisierung der Wellenlängen der Lichtmoden auf, wobei benachbarte Lichtmoden auf benachbarte Kanäle des Mehrkanaldetektors (6) abbildbar sind, oder die Wellenlängen der Lichtmoden sind veränderbar, und spektral benachbarte Lichtmoden sind auf um eine Vielzahl von Kanälen voneinander beabstandete Kanäle des Mehrkanaldetektors (6) abbildbar.

## Beschreibung

### Technisches Gebiet

Die Erfindung bezieht sich auf das Gebiet der Absorptionsspektroskopie. Sie bezieht sich auf eine Vorrichtung und ein Verfahren zur Bestimmung eines Spektrums einer Probe gemäss dem Oberbegriff der unabhängigen Patentansprüche.

### Stand der Technik

Eine derartige Vorrichtung und ein entsprechendes Verfahren ist beispielsweise aus B. Willing et. al., *"Thin film pyroelectric array as a detector for an infrared gas spectrometer";* Infrared Physics & Technology 39 (1998) bekannt. Dort ist ein Infrarot-Spektrometer mit einem Glühdraht als Lichtquelle und einem pyroelektrischen Zeilendetektor als Mehrkanaldetektor offenbart. Die von dem Glühdraht emittierte Strahlung durchläuft eine gasförmige Probe, wird mittels eines Monochromators spektral zerlegt und wird dann auf den Detektor abgebildet. Dadurch erhält man an den einzelnen Kanälen einen Intensitätswert, der jeweils der Intensität bei einer bestimmten Wellenlänge entspricht. Auf diese Weise kann ein komplettes Spektrum sehr schnell gemessen werden, da gleichzeitig an einer Vielzahl von Kanälen die Intensitäten der entsprechenden Wellenlängen auslesbar sind. Somit sind auch zeitaufgelöste Messungen, also die Aufnahme einer Vielzahl von rasch nacheinander gemessenen Spektren, möglich.

Ein solches Spektrometer hat den Nachteil, dass eine hohe spektrale Auflösung nur bei einem schlechten Signal-Rausch-Verhältnis zu realisieren ist, und umgekehrt ein gutes Signal-Rausch-Verhältnis nur bei einer niedrigen spektralen Auflösung erzielbar ist. Dies gilt insbesondere, wenn mit einer hohen Zeitauflösung gemessen werden soll. Darum ist die Nachweisgrenze des Spektrometers nicht sehr niedrig.

### Darstellung der Erfindung

Es ist deshalb Aufgabe der Erfindung, ein Spektrometer und ein entsprechendes Spektroskopieverfahren der eingangs genannten Art zu schaffen, welche die oben genannten Nachteile nicht aufweisen. Insbesondere soll eine niedrige Nachweisgrenze erreicht werden, wobei trotzdem eine schnelle Spektrenbestimmung und hohe Zeitauflösung möglich sein soll.

Diese Aufgabe löst eine Vorrichtung und ein Verfahren mit den Merkmalen der unabhängigen Patentansprüche.

Das erfindungsgemässe Spektrometer zur Bestimmung eines Absorptionsspektrums einer Probe umfasst eine Lichtquelle zur Emission von Licht entlang eines Lichtweges, auf welchem die Probe angeordnet ist, einen auf dem Lichtweg nach der Probe angeordneten Mehrkanaldetektor zur Detektion des Lichtes und ein auf dem Lichtweg zwischen der Lichtquelle und dem Mehrkanaldetektor angeordnetes wellenlängendispersives Element zur Erzeugung einer lichtwellenlängenabhängigen Ablenkung des Lichtes. Das Spektrometer kennzeichnet sich dadurch, dass die Lichtquelle ein Laser ist.

Durch den Einsatz des Lasers ergibt sich ein Spektrometer mit niedriger Nachweisgrenze, hoher spektraler Auflösung und gutem Signal-Rausch-Verhältnis, denn der Laser weist eine sehr hohe spektrale Leistungsdichte auf. Wenn der Laser die verschiedenen Wellenlängen, bei denen Intensitäten für das Spektrum gemessen werden sollen, gleichzeitig erzeugt, ist eine sehr hohe Zeitauflösung erzielbar. Wenn der Laser die verschiedenen Wellenlängen, bei denen Intensitäten für das Spektrum gemessen werden sollen, zeitlich nacheinander erzeugt, ist ebenfalls eine hohe Zeitauflösung erzielbar, da das Verstimmen eines Lasers mit einer relativ hohen Geschwindigkeit möglich ist. Unabhängig davon, ob der Laser die verschiedenen Wellenlängen, bei denen Intensitäten für das Spektrum gemessen werden sollen, gleichzeitig oder zeitlich nacheinander erzeugt, wird eine räumliche Auspaltung der verschiedenen Wellenlängen mittels des wellenlängendispersiven Elements erzeugt und werden die wellenlängenabhängig aufgespaltenen Lichtstrahlen mittels des Mehrkanaldetektors detektiert und können zeitlich integriert werden, ohne dass der Signal-Untergrund zu sehr ansteigt. Dadurch ergibt sich eine niedrige Nachweisgrenze. Zudem ist durch den Einsatz des Lasers die Realisierung sehr grosser Weglängen für die Absorption möglich, da Laserstrahlung deutlich besser kollimierbar ist als beispielsweise thermische Strahlung. Dadurch sind grössere Signale und eine niedrige Nachweisgrenze erzielbar.

In einer vorteilhaften Ausführungsform der Erfindung ist der Laser ein spektraler Singlemode-Laser, der verstimmbar ist. Der Laser erzeugt also zu einem Zeitpunkt nur eine Wellenlänge, welche aber mit der Zeit variiert werden kann. Durch die Kombination eines solchen Lasers mit dem dispersiven Element und dem Mehrkanaldetektor wird durch die Möglichkeit der zeitlichen Integration an den Detektorkanälen ein gutes Signal-Rausch-Verhältnis und eine niedrige Nachweisgrenze erzielt. Der Wellenlängenbereich, über den der Laser verstimmt werden kann, ist im allgemeinen relativ klein. Aber in diesem Wellenlängenbereich kann eine sehr hohe Auflösung erzielt werden. Dadurch ist ein solches Spektrometer sehr gut zur Spektroskopie an Gasen geeignet. Ein mit einem solchen Spektrometer aufgenommenes Spektrum besteht aus einer Vielzahl von Intensitätswerten für verschiedene Wellenlängen, wobei diese Wellenlängen zeitlich nacheinander von dem Laser erzeugt werden (Wellenlängen-Sweep) und mittels des wellenlängendispersiven Elementes räumlich getrennt und schliesslich auf die verschiedenen Kanäle des Mehrkanaldetektors abgebildet werden. Die einzelnen Kanäle können über mehrere Wellenlängen-Sweeps integriert werden, so dass preisgünstige simple, da langsam auslesbare Mehrkanaldetektoren verwendet werden können. Gegenüber der Verwendung eines einkanaligen Detektors, beispielsweise einer Photodiode, hat ein Mehrkanaldetektor den Vorteil, dass die einzelnen Kanäle des Mehrkanaldetektors nicht so schnell ansprechen müssen, wie sich die Wellenlänge ändert, und dass das Auslesen des Detektors langsam vorgenommen werden kann. Dies gilt ebenfalls für die weiter unten beschriebenen verstimmbaren spektralen Multimode-Laser. Besonders vorteilhaft kann als der spektrale Singlemode-Laser ein Distributed Feedback Laser (DFB-Laser) eingesetzt werden.

In einer bevorzugten Ausführungsform ist der Laser ein spektraler Multimode-Laser zur Emission einer Vielzahl von Lichtmoden unterschiedlicher Wellenlängen, beispielsweise ein Fabry-Perot-Quantenkaskadenlaser (QCL). Durch das wellenlängendispersive Element und eventuell weitere optische Komponenten sind Lichtmoden unterschiedlicher Wellenlänge auf unterschiedliche Kanäle des Mehrkanaldetektors abbildbar. Da die verschiedenen Wellenlängen zeitgleich erzeugt werden und zeitgleich detektiert werden, kann nicht nur eine niedrige Nachweisgrenze, sonern auch eine sehr hohe Zeitauflösung erreicht werden. Durch die Kombination des Lasers als Lichtquelle mit der mehrkanaligen, wellenlängenabhängigen Detektion ist der Einsatz preisgünstiger, mit hoher Ausbeute herstellbarer Laser möglich, da der Laser nicht genau nach einer Emissionswellenlänge selektiert werden muss beziehungsweise auf einen externen Resonator zur Wellenlängenselektion verzichtet werden kann.

Besonders vorteilhaft sind in dieser bevorzugten Ausführungsform durch das wellenlängendispersive Element und eventuell weitere optische Komponenten spektral benachbarte Lichtmoden auf benachbarte Kanäle des Mehrkanaldetektors abbildbar. Durch die Abbildung auf benachbarte Kanäle wird der Detektor optimal genutzt und die Aufnahme von Spektren mit vielen Messpunkten ermöglicht. Durch eine solche Abbildung für benachbarte Kanäle wird eine grosse spektrale Auflösung erreicht. Für einen noch grösseren Messbereich, allerdings mit geringerer spektraler Auflösung,können auch mehrere benachbarte Lichtmoden auf einen Detektorkanal abgebildet werden. Ein grosser Vorteil ist, dass alle Intensitätswerte, die das Spektrum umfasst, gleichzeitig detektiert werden können.

Ebenfalls vorteilhaft wird in dieser bevorzugten Ausführungsform eine Vorrichtung zur Stabilisierung der Wellenlängen der Lichtmoden aufgewiesen. Dadurch sind die Wellenlängen der Lichtmoden konstanthaltbar, so dass keine unerwünschte Drift der Messpunkte aufgewiesen wird. Es wird eine grosse Langzeitstabilität des Spektrometers und eine gute Reproduzierbarkeit erreicht. Vorteilhaft wir ein Peltier-Element zur Temperatur-Stabilisierung und somit zur Wellenlängen-Stabilisierung des Lasers eingesetzt.

Ganz besonders vorteilhaft sind in der bevorzugten Ausführungsform die Wellenlängen der Lichtmoden veränderbar. Das emittierte Modenspektrum ist im allgemeinen verschiebbar, wobei sich typischerweise alle Moden synchron parallel verschieben. Dadurch sind schnelle und dennoch hochaufgelöste Messungen bei niedriger Nachweisgrenze möglich, da einerseits mehrere Messpunkte gleichzeitig erzeugbar sind und dennoch ein Wellenlängenabstand der Messpunkte erreichbar ist, der geringer oder deutlich geringer ist als der Wellenlängenabstand benachbarter Lichtmoden.

Mit grossem Vorteil ist in diesem Fall für die Aufnahme des Absorptionsspektrums eine Veränderung der Wellenlängen der Lichtmoden von der Grössenordnung des Wellenlängenabstandes zweier benachbarter Lichtmoden bewirkbar. Am effizientesten erstreckt sich ein Wellenlängen-Sweep über knapp einen Wellenlängenabstand zweier benachbarter Lichtmoden. Denn dadurch sind alle mit dem Detektor messbaren Wellenlängen erzeugbar, und es werden keine Wellenlängen mehrfach erzeugt, wodurch Messzeit vergeudet würde.

Vorteilhaft sind durch das wellenlängendispersive Element und eventuell weitere optische Komponenten spektral benachbarte Lichtmoden derart auf den Mehrkanaldetektor abbildbar, dass sie um mindestens eine Vielzahl von Kanälen voneinander beabstandet sind. Dies ermöglicht eine grosse spektrale Auflösung.

Zur Verstimmung des Lasers kann dieser gepulst betrieben werden und der Laser-Chirp-Effekt ausgenutzt wird. Das heisst, es werden Laserpulse einer solchen Länge erzeugt, dass sich der Laser während eines Pulses derart erwärmt, dass sich während eines Pulses die emittierte Lichtwellenlänge ändert (beziehungsweise die emittierten Lichtwellenlängen sich ändern). Dadurch können extrem schnelle Wellenlängen-Sweeps und somit extrem hoch zeitaufgelöste Messungen realisiert werden. Es kann aber, im vorteilhaften Gegensatz zu einkanaligen Detektoren, ein langsames Auslesen des Detektors vorgenommen werden, wodurch einfache Detektoren verwendbar sind.

Eine weitere vorteilhafte Ausführungsform kennzeichnet sich dadurch, dass die Probe in einer Mehrfachreflexionszelle angeordnet ist. Dadurch kann das Licht grosse Weglängen in der Probe zurücklegen, so dass eine grosse Empfindlichkeit erreicht wird. Insbesondere durch die Kombination mit Laserlicht, welches sehr gut kollimierbar ist, ist die Mehrfachreflexionszelle vorteilhaft.

Das erfindungsgemässe Verfahren zur Bestimmung eines optischen Spektrums einer Probe, wobei von einer Lichtquelle Licht erzeugt wird, die Probe von dem Licht be- oder durchstrahlt wird, das Licht mittels eines wellenlängendispersiven Elements in Abhängigkeit von seiner Wellenlänge abgelenkt wird und mittels eines Mehrkanaldetektors detektiert wird, ist dadurch gekennzeichnet, dass als Lichtquelle ein Laser verwendet wird.

Je nachdem, ob in Transmission oder in Reflexion gearbeitet wird, wird die zu untersuchende Probe durchstrahlt oder bestrahlt. Als Proben kommen feste, flüssige, an einer Oberfläche adsorbierte und, bevorzugt, gasförmige Stoffe und Stoffgemische in Frage. Vorzugsweise wechselwirkt das Licht mit der Probe, bevor es durch das wellenlängendispersive Element aufgespalten wird. Die Absorption in der Probe kann aber auch danach oder sowohl davor als auch danach und/oder innerhalb des dispersiven Elementes stattfinden.

Durch die Verwendung eines Lasers werden ein gutes Signal-Rausch-Verhältnis und eine hohe spektrale Auflösung erreicht.

In einer vorteilhaften Ausführungsform des Spektroskopieverfahrens wird als Lichtquelle ein verstimmbarer spektraler Singlemode-Laser verwendet, wobei zur Bestimmung des Absorptionsspektrums die Wellenlänge des Lichtes mindestens einmal über mindestens den Wellenlängenbereich des Absorptionsspektrums gestimmt wird. Der Laser erzeugt also zu einem gegebenen Zeitpunkt Licht nur einer einzigen Wellenlänge. Diese wird zeitlich variiert, um ein Spektrum aufzunehmen. Durch den Wellenlängenbereich, über den der Laser verstimmt wird, und durch den Wellenlängenbereich, welcher durch die gegenseitige Anordnung von wellenlängendispersivem Element und Mehrkanaldetektor vorgebbar ist, ist der Wellenlängenbereich des Spektrums vorgebbar, da sich dieser als der Überlappbereich dieser zwei Wellenlängenbereiche ergibt. Vorteilhaft stimmen die zwei Wellenlängenbereiche überein, da dadurch die Zeit für die Aufnahme des Spektrums minimierbar ist und eine maximale Anzahl Detektorkanäle genutzt wird.

Der spektrale Messbereich dieses Verfahrens ist im allgemeinen klein, dafür kann aber eine sehr hohe Auflösung erzielt werden. Das Verfahren ist darum besonders gut geeignet zur Untersuchung gasförmiger Proben, insbesondere wenn mit Störsignalen durch andere Spezies mit überlappenden Absorptionslinien zu rechnen ist.

In einer weiteren vorteilhaften Ausführungsform des Spektroskopieverfahrens wird als Lichtquelle ein spektraler Multimode-Laser verwendet, wobei durch das wellenlängendispersive Element und eventuell weitere optische Komponenten spektral benachbarte Lichtmoden des Lasers auf benachbarte Kanäle des Mehrkanaldetektors abgebildet werden.

Spektrale Multimode-Laser sind einfach hestellbar und preisgünstig und weisen Wellenlängen in einem grossen Wellenlängenbereich auf, so dass grosse Wellenlängenbereiche untersuchbar sind. Es ist auch möglich, nicht jeden der Detektorkanäle mit dem aufgespaltenen Licht zu bestrahlen, also beispielsweise nur jeden zweiten oder jeden dritten Kanal usw. zu benutzen. Es ist auch möglich, mehrere spektrale Lichtmoden auf einen Detektorkanal abzubilden, so dass sich das gemessene Spektrum über einen noch grösseren spektralen Bereich erstrecken kann. Da die durch den Wellenlängenabstand benachbarter benutzter Detektorkanäle gegebene Auflösung in diesem Verfahren im allgemeinen nicht sehr gross ist, ist das Verfahren besonders vorteilhaft zur Messung von Flüssigkeiten geeignet.

In einer besonders vorteilhaften Ausführungsform des Spektroskopieverfahrens wird als Lichtquelle ein spektraler Multimode-Laser verwendet, wobei durch das wellenlängendispersive Element und eventuell weitere optische Komponenten spektral benachbarte Lichtmoden des Lasers derart auf den Mehrkanaldetektor abgebildet werden, dass sie um mindestens eine Vielzahl von Kanälen voneinander beabstandet sind, und wobei zur Bestimmung des Absorptionsspektrums mindestens einmal eine Veränderung der Wellenlängen der Lichtmoden von der Grössenordnung des Wellenlängenabstandes zweier benachbarter Lichtmoden bewirkt wird. Der Laser wird vorteilhaft um knapp einen Modenabstand verstimmt. Weil mehrere Wellenlängen gleichzeitig detektierbar sind, sind schnelle Messungen möglich. Während des Verstimmens werden von einer Lichtmode mehrere Detektorkanäle überstrichen, so dass eine hohe spektrale Auflösung erreicht werden kann, wobei der Messpunktabstand um ein Vielfaches, insbesondere mindestens einer Grössenordnung, kleiner sein kann als der spektrale Modenabstand des Laserlichts.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche mittels der beiliegenden Zeichnungen veranschaulicht sind, näher erläutert. Es zeigen schematisch:
- Fig. 1: ein erfindungsgemässes Absorptionsspektrometer;
- Fig. 2: ein simuliertes Beispiels-Absorptionsspektrum von NH₃.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

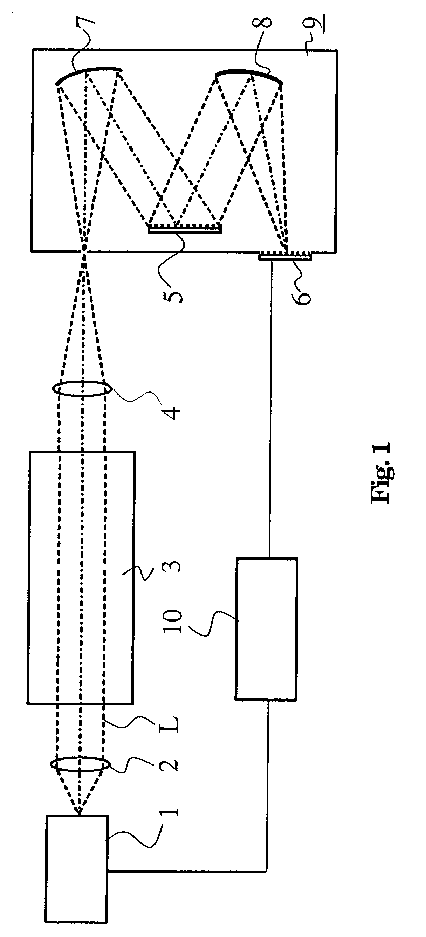

Fig. 1 zeigt schematisch ein erfindungsgemässes Absorptionsspektrometer. Es umfasst als Lichtquelle 1 einen spektralen Multimode-Laser 1 zur Erzeugung einer Vielzahl spektraler Moden unterschiedlicher Wellenlänge. Der Begriff "spektraler Multimode-Laser" soll ausdrücken, dass von dem Laser simultan Licht verschiedener Wellenlängen emittierbar ist. Dass der Laser eventuell auch mehrere Raum- und/oder Polarisationsmoden aufweist, ist möglich. Der Laser ist vorteilhaft ein Fabry-Perot-Laser 1, so dass die spektralen Moden bezüglich ihrer Wellenlänge äquidistant sind. Der Laser 1 ist vorteilhaft verstimmbar, das heisst dass das von ihm emittierte Modenspektrum veränderbar oder verschiebbar ist. Das von dem Laser erzeugte Licht L wird mittels eines Kollimators 2 kollimiert und durch die vorteilhaft gasförmige Probe 3 gestrahlt, welche innerhalb eines Probevolumens angeordnet ist. Eine weitere Linse 4 bildet das Licht L nach dem Durchlaufen der Probe 3 auf einen Eingang eines Monochromators 9 ab.

Der Monochromator 9 beinhaltet zwei Spiegel 7,8 und als wellenlängendispersives Element 5 ein Gitter 5. Durch das Reflexionsgitter 5 werden die Lichtmoden mit einem von der Wellenlänge abhängigen Austrittswinkel reflektiert, so dass eine räumliche Aufspaltung des Lichtes L in Abhängigkeit von der Wellenlänge bewirkt wird. Verschiedene Wellenlängen werden also räumlich getrennt. Das so aufgespaltene Licht L wird auf einen Mehrkanaldetektor 6 abgebildet, welcher vorteilhaft als ein Zeilendetektor 6, beispielsweise gemäss dem in der genannten Publikation von B. Willing et al. genannten, ausgebildet ist.

Der Mehrkanaldetektor 6 hat die Aufgabe, das mittels des wellenlängendispersiven Elements 5 räumlich aufgespaltene Licht L mittels mehrerer, jeweils einer Wellenlänge (genauer: einem schmalen Wellenlängenbereich) zugeordneten Detektorkanäle zu detektieren.

Eine Steuerungs- und Auswerte-Einheit 10 ist einerseits vorteilhaft mit dem Laser 1 wirkverbunden, um die Verstimmung des Lasers zu steuern oder zu überwachen und andererseits mit dem Mehrkanaldetektor 6 wirkverbunden, um die an den Detektorkanälen detektierten Intensitäten auszulesen und das Spektrum auszuwerten.

Durch das Gitter 5 (und den Spiegel 8) werden die Lichtmoden derart auf den Mehrkanaldetektor 10 abgebildet, dass benachbarte Lichtmoden um mindestens mehrere Detektorkanäle voneinander beabstandet sind. Mindestens eine Lichtmode wird auf den Mehrkanaldetektor 10 abgebildet; vorteilhaft werden mehrere darauf abgebildet. Zur Aufnahme eines Spektrums wird der Laser 1 verstimmt, so dass die mindestens eine Lasermode mehrere Detektorkanäle überstreift und dort zu entsprechenden Intensitätswerten führt. Vorteilhaft wird der Laser so weit verstimmt, dass jeder Kanal während eines Verstimmungsvorgangs (in einer Richtung) genau einmal von einem Lichtmode überstrichen wird.

Während der Aufnahme eines Spektrums sollte die Abbildung auf den Mehrkanaldetektor 6 nicht verändert werden; vorteilhaft werden Gitter 5 (Monochromator 9) und Mehrkanaldetektor 6 dazu relativ zueinander fix gehalten.

Durch die Messung eines kompletten Spektrums, das Intensitätswerte bei einer Vielzahl von unterschiedlichen Wellenlängen aufweist, wird gegenüber Messungen bei nur zwei, drei oder vier Wellenlängen eine deutlich verbesserte Unempfindlichkeit von Konzentrations-Bestimmungen gegenüber Störeinflüssen durch weitere Spezies mit Absorptionslinien nahe den Absorptionslinien der Probe erreicht, und unbekannte Proben-Spezies können identifiziert werden. Aus einem Spektrum kann mit grosser Genauigkeit die Konzentration der in der Probe enthaltenen Spezies bestimmt werden.

Fig. 1 kann auch zur Illustration von Spektrometern mit nichtdurchstimmbaren Multimode-Lasern und zur Illustration von Spektrometern mit durchstimmbaren Singlemode-Lasern

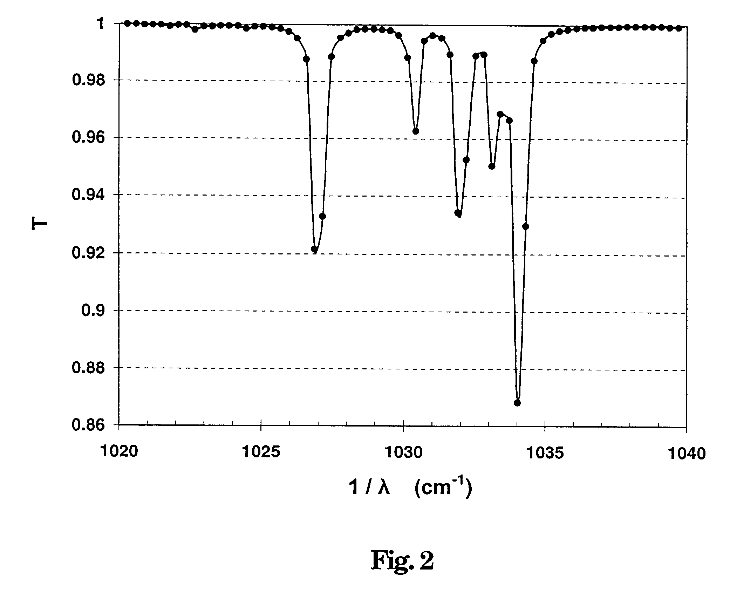

Fig. 2 zeigt ein simuliertes Absorptionsspektrum für die Detektion von Ammoniak (NH₃) bei etwa 1030 cm⁻¹ (Wellenlänge 9.6 mm) mittels eines Spekrometers gemäss Fig. 1. Auf der x-Achse ist die Wellenzahl (1 /λ) in cm⁻¹ und auf der y-Achse die normierte Transmission (T) aufgetragen.

Die folgenden Parameter wurden der Simulation zugrundegelegt und können der Angabe der Grössenordnungen der Parameter dienen:
- Laser 1: Fabry-Perot Quantum-Cascade Laser mit mehr als 10, typischerweise etwa 100, spektral verschiedenen Emissions-Wellenlängen (Lasermoden) im Bereich um 1030 cm⁻¹.
- Probe 3: 10 ppm NH₃(in synthetischer Luft), angeordnet in einer Herriott-Mehrwegzelle mit 10 m optischer Weglänge
- dispersives Element 5,9: Monochromator 9 mit einem Reflexionsgitter 5 mit 150 Furchen/mm
- Mehrkanaldetektor 6: Infrarot-Detektorarray mit 64 Kanälen (Pixeln)

Das beugungsbedingte Auflösungsvermögen der Apparatur beträgt mit diesen Parametern etwa 0.3 cm⁻¹. Der Gitterwinkel des Monochromators 9 wird so gewählt, dass mittels des Gitters 5 und der nachfolgenden Optik (Spiegel 8) der Wellenzahlbereich von 1030 cm⁻¹ bis 1050 cm⁻¹ auf die 64 Kanäle des Detektorarrays 6 abgebildet wird. Mit dieser Anordnung kann die Struktur der NH₃-Absorption sehr empfindlich und selektiv in dem genannten Wellenlängenbereich gemessen werden, wie Fig. 2 zu entnehmen ist.

Wenn das Untergrundsignal schwer bestimmbar ist, also der nicht durch die NH₃-Absorption beeinflusste Signalanteil nicht ohne weiteres auf Transmission 1 normierbar ist, beispielsweise wenn Absorptionen durch andere Substanzen vorliegen oder bei Leistungsfluktuationen der verschiedenen Lasermoden, so empfiehlt sich zur Normierung der Messwerte der Einsatz eines Referenzkanals, wie weiter unten angegeben.

Die weiter oben und im folgenden aufgeführten alternativen oder zusätzlichen Merkmale sind optional und untereinander sowie mit den in der Beschreibung dargestellten Ausführungsbeispielen beliebig kombinierbar.

Vorteilhaft kann vorgesehen sein, ein Referenzspektrum zur Wellenlängen- und/oder Intensitätsnormierung aufzunehmen. Dazu kann beispielsweise mittels eines nicht-dargestellten Strahlteilers zwischen der Linse 2 und der Probe 3 Licht ausgekoppelt und untersucht werden. Eine noch bessere Möglichkeit, ein geeignetes Referenzspektrum zu erhalten, ist, den Lichtstrahl L um die Probe 3 herumzulenken, beispielsweise mittels vor und nach der Probe in den Lichtweg L schwenkbarer Spiegel (nicht dargestellt). In diesem Falle könnten derselbe Monochromator 9 und derselbe Mehrkanaldetektor 6 für die Normierung verwendet werden, wodurch eine sehr exakte Normierung möglich ist. Die spektrale Information wird vorteilhaft aus dem Verhältnis oder der Differenz der Proben-Messung und einer Referenz-Messung gewonnen.

Das verwendete Licht kann im ultravioletten, im sichtbaren oder infraroten Bereich liegen. Für gasförmige Proben ist infrarotes Licht besonders vorteilhaft, da dort die meisten Gase viele charakteristische Absorptionslinien aufweisen.

Das Laserlicht kann gepulst oder auch kontinuierlich (cw) sein.

Die Verstimmung des Lasers kann beispielsweise mittels Änderung der Temperatur des Lasers, durch Veränderung der Laserkavitätslänge und/oder bei Halbleiterlasern mittels Änderung des Injektionsstromes (bewirkt auch eine Temperaturänderung) erreicht werden. Es kann auch ein externer Resonator benutzt werden. Bei gepulsten Lasern kann der Laser-Chirp ausgenutzt werden. Bei Qantenkaskadenlasern können Pulse bis etw 30 ns Pulsdauer eine praktisch konstante Emissionswellenlänge aufweisen. Zur Erzeugung eines geeigneten Laser-Chirps können beispielsweise Pulsdauern von der Grössenordnung 100 ns bis 300 ns und mehr verwendet werden. Durch die Mehrkanaldetektion reicht es aber trotzdem, einen im Hz- oder kHz-Bereich auslesbaren, und darum einfachen und einfach erhältlichen, preiswerten Detektor zu benutzen, wobei die Laser-Pulsfrequenzen typischerweise im MHz-Bereich liegen.

Zur Änderung der Temperatur des Lasers oder auch zum Konstanthalten der Temperatur des Lasers eignen sich beispielsweise Peltier-Elemente, die in thermischem Kontakt mit dem Laser sind.

Zur Strahlführung und Definition des Lichtweges L können verschiedene optische Elemente im Lichtweg angeordnet sein, wie beispielsweise in Fig. 1 die Linsen 2 und 4 und die Spiegel 7 und 8.

Die Probe 3 kann vorteilhaft in einer Mehrfachreflexionszelle angeordnet sein, beispielsweise in einer Herriott- oder einer White-Zelle. Es ist auch möglich, die Probe 3 innerhalb des Monochromators 9 anzuordnen. Proben können beispielsweise bekannte Spezies in zu bestimmender Konzentration enthalten oder auch unbekannte Spezies, die es zu bestimmen gilt, gegebenenfalls inklusive deren Konzentration.

Als wellenlängendispersive Element 5 kann beispielsweise ein ebenes oder ein gebogenes Gitter 5 oder ein Prisma dienen oder ein sonstiger Monochromator 9. Ausser der Aufgabe der wellenlängenabhängigen Ablenkung des Lichtes hat das wellenlängendispersive Element im Falle der verstimmbaren Lichtquellen noch die Aufgabe, die zeitliche Änderung der Wellenlänge in eine räumliche Änderung der Strahlrichtung zu transformieren.

Als Mehrkanaldetektor 6 können die oben genannten Detektoren oder sonstige ortsaufgelöste Detektoren, wie beispielsweise eine Mikrokanalplatte, ein CCD-Modul (charge-coupled device) oder auch eine Anordnung von Photodioden dienen. Im allgemeinen reicht eine eindimensionale Auflösung (eindimensionale Anordnung der Detektorkanäle) des Mehrkanaldetektors 6; selbstverständlich ist auch ein zweidimensional auflösender Detektor einsetzbar.

Wenn der verwendete Mehrkanaldetektor 6 kontinuierliches Licht (cw) oder schnelle Lichtpulse nicht detektieren kann, wie es beispielsweise bei pyroelektrischen Detektoren der Fall ist, empfiehlt es sich, mittels einer Lichtunterbrechungsvorrichtung Pulse geeigneter Länge zu erzeugen. Diese Lichtunterbrechungsvorrichtung kann ein mechanischer Chopper oder, im Falle von Halbleiterlasern, vorteilhaft die Injektionsstrom-Steuerung sein, welche mit einer geeigneten Frequenz und Pulsweite den Injektionsstrom und damit die Lichtemission an- und ausschaltet.

Vorteilhaft wird im Falle eines spektralen Multimode-Lasers 1, aber auch im Falle eines spektralen Singlemode-Lasers ein spektraler Lichtmode auf nicht mehr als einen Detektorkanal abgebildet.

Die genannten Merkmale können gemeinsam oder auch einzeln oder in beliebiger Kombination vorteilhaft sein.

### Bezugszeichenliste

- 1: Lichtquelle, Laser
- 2: Linse, Kollimator
- 3: Probe
- 4: Linse
- 5: wellenlängendispersives Element, Beugungsgitter
- 6: Mehrkanaldetektor
- 7: Spiegel
- 8: Spiegel
- 9: Monochromator
- 10: Steuerungs- und Auswerte-Einheit

## Patentansprüche

1. Spektrometer zur Bestimmung eines Absorptionsspektrums einer Probe (3), umfassend
- eine Lichtquelle (1) zur Emission von Licht (L) entlang eines Lichtweges (L), auf welchem die Probe (3) angeordnet ist,
- einen auf dem Lichtweg (L) nach der Probe (3) angeordneten Mehrkanaldetektor (6) zur Detektion des Lichtes (L), und
- ein auf dem Lichtweg (L) zwischen der Lichtquelle (1) und dem Mehrkanaldetektor (6) angeordnetes wellenlängendispersives Element (5) zur Erzeugung einer lichtwellenlängenabhängigen Ablenkung des Lichtes (L),
**dadurch gekennzeichnet, dass** die Lichtquelle (1) ein Laser (1) ist.

2. Spektrometer gemäss Anspruch 1, **dadurch gekennzeichnet, dass** der Laser (1) ein spektraler Singlemode-Laser (1) ist, der verstimmbar ist.

3. Spektrometer gemäss Anspruch 2, **dadurch gekennzeichnet, dass** der Laser (1) ein verstimmbarer Distributed-Feedback-Laser (1) ist.

4. Spektrometer gemäss Anspruch 1, **dadurch gekennzeichnet, dass** der Laser (1) ein spektraler Multimode-Laser (1) zur Emission einer Vielzahl von Lichtmoden unterschiedlicher Wellenlängen ist, wobei Lichtmoden unterschiedlicher Wellenlänge auf unterschiedliche Kanäle des Mehrkanaldetektors (6) abbildbar sind.

5. Spektrometer gemäss Anspruch 4, **dadurch gekennzeichnet, dass** spektral benachbarte Lichtmoden auf benachbarte Kanäle des Mehrkanaldetektors (6) abbildbar sind.

6. Spektrometer gemäss Anspruch 4 oder 5, **dadurch gekennzeichnet, dass** eine Vorrichtung zur Stabilisierung der Wellenlängen der Lichtmoden aufgewiesen wird, insbesondere dass die Vorrichtung zur Stabilisierung der Wellenlängen der Lichtmoden ein Peltier-Element umfasst.

7. Spektrometer gemäss Anspruch 4, **dadurch gekennzeichnet, dass** die Wellenlängen der Lichtmoden veränderbar sind.

8. Spektrometer gemäss Anspruch 7, **dadurch gekennzeichnet, dass** für die Aufnahme des Absorptionsspektrums eine Veränderung der Wellenlängen der Lichtmoden von der Grössenordnung des Wellenlängenabstandes zweier benachbarter Lichtmoden bewirkbar ist.

9. Spektrometer gemäss Anspruch 7 oder 8, **dadurch gekennzeichnet, dass** spektral benachbarte Lichtmoden derart auf den Mehrkanaldetektor (6) abbildbar sind, die sie um mindestens eine Vielzahl von Kanälen voneinander beabstandet sind.

10. Spektrometer gemäss einem der Ansprüche 2, 3, 7, 8 und 9, **dadurch gekennzeichnet, dass** der Laser (1) gepulst betrieben wird, und dass zur Veränderung der Wellenlänge oder der Wellenlängen des Lasers (1) der Laser-Chirp-Effekt ausgenutzt wird.

11. Spektrometer gemäss einem der vorangegangenen Ansprüche, **dadurch gekennzeichnet, dass** die Probe (3) in einer Mehrfachreflexionszelle angeordnet ist.

12. Verfahren zur Bestimmung eines optischen Spektrums einer Probe (3), wobei von einer Lichtquelle (1) Licht (L) erzeugt wird, die Probe (3) von dem Licht (L) be- oder durchstrahlt wird, das Licht (L) mittels eines wellenlängenselektiven Elements (5) in Abhängigkeit von seiner Wellenlänge abgelenkt wird, und mittels eines Mehrkanaldetektors (6) detektiert wird, **dadurch gekennzeichnet, dass** als Lichtquelle (1) ein Laser verwendet wird.

13. Verfahren gemäss Anspruch 12, **dadurch gekennzeichnet, dass** als Lichtquelle (1) ein verstimmbarer spektraler Singlemode-Laser (1) verwendet wird, wobei zur Bestimmung des Absorptionsspektrums die Wellenlänge des Lichtes (L) mindestens einmal über mindestens den Wellenlängenbereich des Absorptionsspektrums gestimmt wird.

14. Verfahren gemäss Anspruch 12, **dadurch gekennzeichnet, dass** als Lichtquelle (1) ein spektraler Multimode-Laser (1) verwendet wird, wobei spektral benachbarte Lichtmoden des Lasers (1) auf benachbarte Kanäle des Mehrkanaldetektors (6) abgebildet werden.

15. Verfahren gemäss Anspruch 12, **dadurch gekennzeichnet, dass** als Lichtquelle (1) ein spektraler Multimode-Laser (1) verwendet wird, wobei spektral benachbarte Lichtmoden des Lasers derart auf den Mehrkanaldetektor (6) abgebildet werden, dass sie um mindestens eine Vielzahl von Kanälen voneinander beabstandet sind, und wobei zur Bestimmung des Absorptionsspektrums mindestens einmal eine Veränderung der Wellenlängen der Lichtmoden von der Grössenordnung des Wellenlängenabstandes zweier benachbarter Lichtmoden bewirkt wird.
